# EUROPÄISCHE PATENTSCHRIFT

(11) **EP 2 002 944 B1**
(45) Veröffentlichungstag und Bekanntmachung des Hinweises auf die Patenterteilung: **28.12.2016**
(21) Anmeldenummer: 08017309.9
(22) Anmeldetag: 02.05.2007
(51) Int. Cl.: B23D 47/02, B25H 1/06, B25H 1/10

(54) **Maschinenständer**
Machine stands
Supports de machines

(30) Priorität: 12.06.2006 DE 202006009307 U
(43) Veröffentlichungstag der Anmeldung: 17.12.2008
(62) Teilanmeldung aus: 07724771.6
(73) Patentinhaber: Metabowerke GmbH, 72622 Nürtingen (DE)
(72) Erfinder: Bergmann, Laurenz, 49733 Haren/Ems (DE); Blekker, Ingo, 49843 Uelsen (DE); Evers, Jürgen, 48480 Spelle (DE); Meelker, Thomas, 49767 Twist (DE); Raasch, Klaus, 49744 Geeste (DE)
(74) Vertreter: Lorenz, Markus

(56) Entgegenhaltungen:
- EP-A- 1 275 476
- WO-A-2004/050309
- DE-A1- 10 303 115
- DE-U1- 9 200 204
- US-A- 5 836 365
- US-A1- 2006 272 744

## Beschreibung

Die Erfindung betrifft einen Maschinenständer mit den Merkmale des Oberbegriffs von Anspruch 1 bzw. von Anspruch 2.

Maschinenständer der in Rede stehenden Art sind in verschiedenen Ausführungsformen bekannt. Der bekannte Maschinenständer, von dem die Erfindung konkret ausgeht (EP-A-1 275 476), dient der sicheren Anordnung und Halterung einer Kapp- und Gehrungssäge auf einer Plattform, die ihrerseits mit zwei an der Unterseite befindlichen Maschinenhaltern auf einem langgestreckten Tragkörper des Maschinenständers befestigt ist. Damit ist es möglich, mit der Kapp- und Gehrungssäge oder einer anderen Werkzeugmaschine in einer Arbeitshöhe zu arbeiten, die einem üblichen Arbeitstisch in einem Werkraum entspricht. Der Maschinenständer ersetzt als transportables Gerät gewissermaßen den Arbeitstisch in der Werkstatt.

An dem langgestreckten Tragkörper des bekannten Maschinenständers sind endseitig jeweils zwei Standbeine angeordnet, die in Gebrauchsstellung trapezartig schräg nach außen gerichtet sind. Dadurch hat der Maschinenständer eine hohe Standfestigkeit.

Der Tragkörper ist als verwindungssteifes Rückgrat des Maschinenständers einstückig als Hohlprofil aus stranggepreßtem Leichtmetall, insbesondere Aluminium ausgeführt. In die Hohlkammer des Tragkörpers ist ein Verlängerungsprofil einschiebbar, mit dem ein Zusatzständer am eigentlichen Maschinenständer, diesen verlängernd angebracht werden kann.

Der Tragkörper selbst ist derart mit in Längsrichtung verlaufenden Formschlußmitteln, nämlich mehreren T-Schienen ausgestaltet, daß an ihm Anbauteile, insbesondere die bereits erwähnten Maschinenhalter für die Plattform der Werkzeugmaschine, insbesondere der Kapp- und Gehrungssäge, in Längsrichtung verschiebbar angebracht werden können. Neben den Maschinenhaltern für die Plattform der Kapp- und Gehrungssäge sind auch andere Anbauteile an diesen T-Schienen des Tragkörpers anbringbar. Dabei handelt es sich beispielsweise um Werkstückstützen, mit denen ein langes Werkstück in Höhe des Werkstückauflagetisches der Klapp- und Gehrungssäge unterstützt werden kann, und um Längenanschläge für ein solches Werkstück.

Ähnliche Maschinenständer wie zuvor beschrieben sind auch aus anderem Stand der Technik bekannt (US-A-5,836,365; DE-A-103 03 115).

Die Konstruktion des zuvor erläuterten Maschinenständers ist in Hinsicht auf die Klemmechanik für die Anbauteile noch nicht optimal. Der Lehre liegt daher das Problem zugrunde, einen in dieser Hinsicht optimierten Maschinenständer zu schaffen.

Für die folgenden Erläuterungen gilt, daß Bezüge zu horizontal und vertikal, Längsrichtung und Querrichtung bei aufgebautem Maschinenständer, also in Gebrauchsstellung, zu verstehen sind, sofern nichts anderes gesagt wird.

Die Lehre der Erfindung löst das zuvor aufgezeigte Problem in einer ersten Variante durch die Merkmale von Anspruch 1 und in einer zweiten Variante durch die Merkmale des Anspruchs 2. Zu letzterem sind bevorzugte Ausgestaltungen Gegenstand der Unteransprüche.

Ei-findungsgemäß ist die Klemmechanik mit einer feststehenden Klemmbacke und einer dagegen verstellbaren Klemmbacke besonders zweckmäßig ausgestaltel.

Nachfolgend wird der erfindungsgemäße Maschinenständer anhand einer lediglich Ausführungsbeispiele darstellenden Zeichnung näher erläutert. Bei der Erläuterung der Ausführungsbeispiele anhand der Zeichnung werden auch und besonderes alle Vorteile und Wirkungen verschiedener Merkmale des erfindungsgemäßen Maschinenständers im Detail erläutert. In der Zeichnung zeigt
- Fig. 1: in einer perspektivischen Ansicht ein Ausführungsbeispiel eines erfindungsgemäßen Maschinenständers ohne aufgebaute Werkzeugmaschine,
- Fig. 2: in einer Fig. 1 entsprechenden Darstellung den Maschinenständer aus Fig. 1 nun mit einer aufgebauten Werkzeugmaschine, nämlich einer Kapp- und Gehrungssäge,
- Fig. 3: das Ende des Tragkörpers eines Maschinenständers gemäß Fig. 1 in perspektivischer Ansicht mit daran angebrachtem, teilweise ausgezogenem Verlängerungsrohr,
- Fig. 4: in perspektivischer Ansicht eine Werkstückstütze als Anbauteil eines Maschinenständers der in Rede stehenden Art,
- Fig. 5: in einer Fig. 3 ähnlichen Darstellung die Klemmechanik einer Werkstückstütze gemäß Fig. 4,
- Fig. 6: in perspektivischer Ansicht ein weiteres Ausführungsbeispiel einer Werkstückstütze, hier mit einer Auflagerolle,
- Fig. 7: in perspektivischer Ansicht ein drittes Ausführungsbeispiel einer Werkstückstütze in Stützstellung,
- Fig. 8: die Werkstückstütze aus Fig. 7 in Anschlagstellung,
- Fig. 9: ein erstes Ausführungsbeispiel eines Maschinenhalters für einen erfindungsgemäßen Maschinenständer,
- Fig. 10: das "Innenleben" des Maschinenhalters aus Fig. 9,
- Fig. 11: ein zweites Ausführungsbeispiel eines erfindungsgemäßen Maschinenhalters,
- Fig. 12: das "Innenleben" des Maschinenhalters aus Fig. 11,
- Fig. 13: ein drittes Ausführungsbeispiel eines erfindungsgemäßen Maschinenhalters,
- Fig. 14: das "Innenleben" des Maschinenhalters aus Fig. 13,
- Fig. 15: ein viertes Ausführungsbeispiel eines erfindungsgemäßen Maschinenhalters in perspektivischer Ansicht, schräg von unten,
- Fig. 16: ein fünftes Ausführungsbeispiel eines erfindungsgemäßen Maschinenhalters in einer Fig. 15 ähnlichen Darstellung,

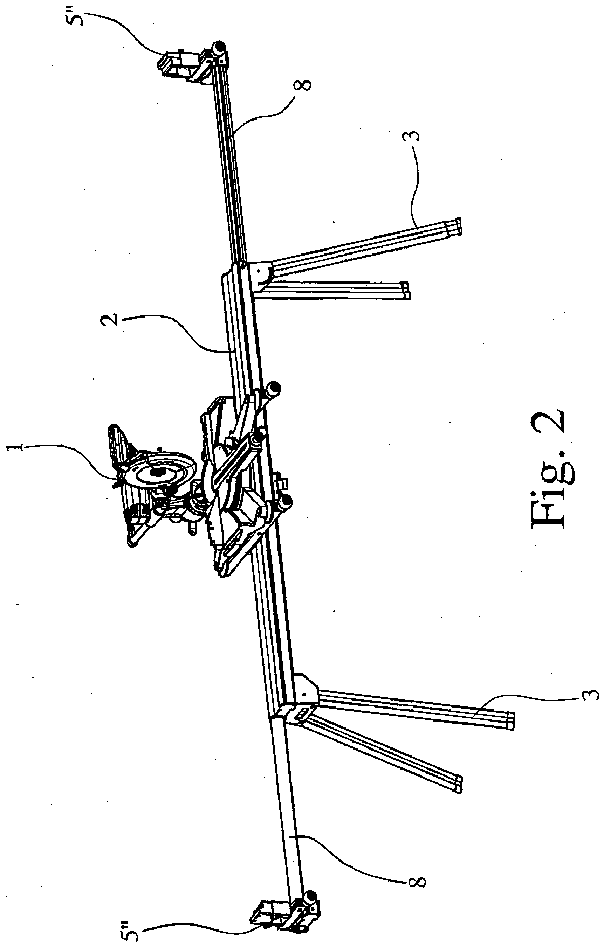

Der in den Zeichnungen in verschiedenen Ausführungsbeispielen dargestellte erfindungsgemäße Maschinenständer dient gewissermaßen als transportabler Arbeitstisch zur Anordnung einer Werkzeugmaschine, insbesondere einer Kappund Gehrungssäge 1 (Fig. 2) in einer angenehmen Bearbeitungshöhe, beispielsweise an einer Baustelle oder an unterschiedlichen Stellen im Haus bei einem Innenausbau.

Für die Anordnung der Kapp- und Gehrungssäge 1 auf dem Maschinenständer gibt es verschiedene Möglichkeiten, die umfangreich aus dem Stand der Technik bekannt sind. Grundsätzlich könnte man die Kapp- und Gehrungssäge 1 auf dem Maschinenständer insgesamt ihrerseits nochmals um eine Hochachse drehbar anordnen, um bestimmte Zusatzfunktionen zu erzielen.

Im übrigen gilt, daß der Maschinenständer ein Universalteil ist, das mit jeder Art von Werkzeugmaschine sinnvoll eingesetzt werden kann.

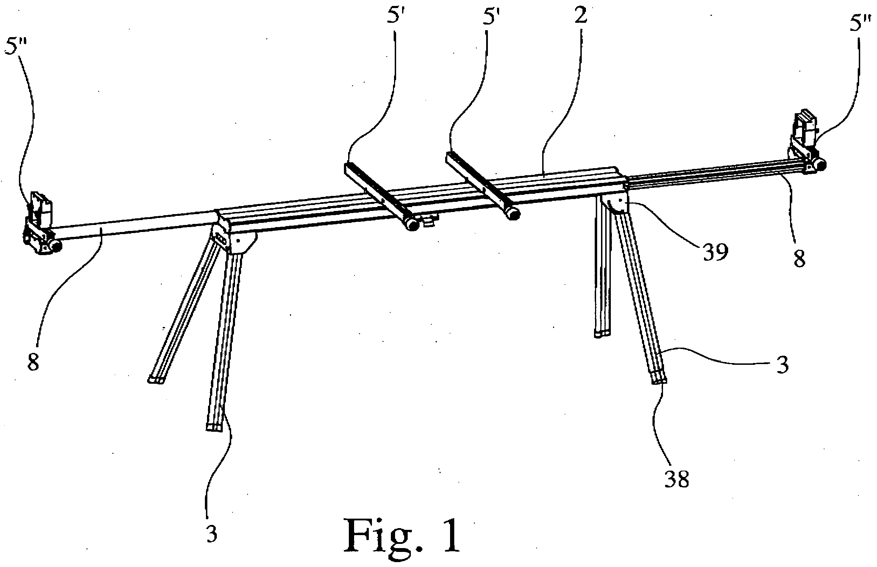

Der in Fig. 1 und 2 zunächst in seiner Gesamtheit dargestellte Maschinenständer weist als strukturgebendes Rückgrat einen langgestreckten Tragkörper 2 auf. Endseitig am Tragkörper 2 sind Standbeine 3 angeordnet. Normalerweise hat man insgesamt vier Standbeine 3, die jeweils paarweise am Ende des Tragkörpers 2 in Gebrauchsstellung nach außen trapezartig abragen und so dem Maschinenständer insgesamt einen sicheren Stand geben.

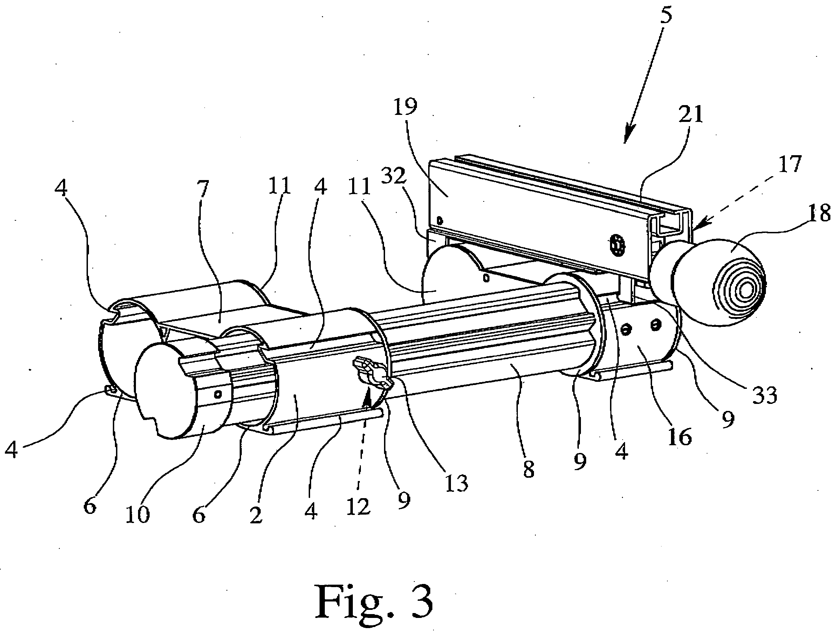

Bereits in Fig. 1 und 2 ist angedeutet, in Fig. 3 ist es deutlicher erkennbar, daß der Tragkörper 2 derart mit in Längsrichtung verlaufenden Formschlußmitteln 4 gestaltet ist, daß an ihm Anbauteile 5, insbesondere mindestens ein Maschinenhalter 5', in Fig. 1 sind zwei Maschinenhalter 5' zu sehen, anbringbar sind. Die Anbringung der Anbauteile 5 am Tragkörper 2 ist gegebenenfalls längsverschiebbar gewährleistet. Das gilt in Fig. 1 und 2 für die Maschinenhalter 5', wodurch es möglich ist, die Werkzeugmaschine, hier die Kapp- und Gehrungssäge 1, genau mittig auf dem Tragkörper 2 zu positionieren.

Anhand der weiteren Figuren werden nun viele Details des erfindungsgemäßen Maschinenständers im einzelnen beschrieben.

In Fig. 3 ist das rechte Ende des Tragkörpers 2 etwa in der Mitte dargestellt. Man muß also verstehen, daß sich der Tragkörper 2 bei der Darstellung in Fig. 3 nach links über den Bildrand hinaus fortsetzt.

Wesentlich ist nun zunächst, daß nach einer ersten Lehre der Erfindung der Tragkörper 2 einstückig als Doppelrohrprofil mit zwei mit seitlichem Abstand voneinander parallel zueinander verlaufenden Profilrohren 6 und mindestens einem die Profilrohre 6 verbindenden Mittelsteg 7 ausgerührt ist. Im dargestellten und bevorzugten Ausführungsbeispiel sind die Profilrohre 6 des den Tragkörper 2 bildenden Doppelrohrprofils durch zwei mit Abstand übereinander liegende Mittelstege 7 verbunden.

Dabei ist der Tragkörper 2 insgesamt nach bevorzugter Lehre als Strangpreßprofil aus hochfestem, vorzugsweise faserverstärktem Kunststoff ausgeführt oder, im dargestellten Ausführungsbeispiel und nach bevorzugter Lehre aus Leichtmetall, insbesondere Aluminium als Profil extrudiert. Die im Querschnitt hantelförmige Gestalt des Tragkörpers 2 gibt diesem nicht nur eine vorzügliche Verwindungssteifigkeit über die volle Länge des Tragkörpers 2, sondern auch noch ein sehr elegantes, geschlossenes Aussehen. Zwei übereinanderliegende Mittelstege 7 führen dazu, daß man glatte Außenflächen hat und den Tragkörper 2 besonders gut reinigen kann.

Das dargestellte und bevorzugte Ausführungsbeispiel (Fig. 3) zeigt ferner, daß der Innenquerschnitt der Profilrohre 6 des Doppelrohrprofils nicht rund ist. Die Formschlußmittel 4 sind an den Profilrohren 6 ausgebildet und derart angeordnet, daß eben diese Funktion erreicht wird. Im dargestellten Ausführungsbeispiel sieht man (Fig. 3) an der Oberseite der Profilrohre 6 oberseitig als Längsnuten in das Profilrohre 6 eingebrachte Formschlußmittel 4, während unterseitig nach außen abragende leistenartige Formschlußmittel 4 zu sehen sind.

Bereits Fig. 1 zeigt den Tragkörper 2 des Maschinenständers beidseitig verlängert. In Fig. 3 kann man ferner erkennen, daß nach bevorzugter Lehre dazu vorgesehen ist, daß in mindestens einem Profikohr 6 ein Verlängerungsrohr 8 mit dem Innenquerschnitt des Profilrohrs 6 angepaßtem Außenquerschnitt ausziehbar angeordnet ist, Ein Verlängerungsrohr in jedem der beiden Profilrohre 6 erlaubt die in Fig. 1 und 2 erkennbare Verlängerung des Tragkörpers 2 zu beiden Enden hin gewissermaßen in "symmetrischer" Weise. Man kann so die wirksame Länge für die Unterstützung langgestreckter Werkstücke auf etwa die 2 ½-fache Länge des Tragkörpers 2 selbst erhöhen.

Während das Grundprinzip der beidseits ausziehbaren Verlängerungsrohre 8 an sich aus dem Stand der Technik bekannt ist, soll nun anhand der Fig. 3 erläutert werden, was bei der vorliegenden Erfindung an besonderen Merkmalen für die Verlängerungsrohre 8 verwirklicht ist. Grundsätzlich sind diese Merkmale unabhängig davon zu verwirklichen, wie der Tragkörper 2 gestaltet ist.

Zunächst ist vorgesehen, daß das Verlängerungsrohr 8 am äußeren Ende offen ist und einen lichten Innendurchmesser aufweist, der einem Nenn-Außendurchmesser von Rohren, insbesondere im Zollmaß, entspricht. Dadurch ist es möglich, nochmals ein weiteres Verlängerungsrohr einzubringen, nämlich eine dann vom Benutzer selbst zu realisierende Verlängerung mit einem normalen Installationsrohr vornehmen zu können.

Selbst sehr sauber extrudierte Profile haben ihre Unebenheiten. Deshalb ist es ungünstig, das Verlängerungsrohr 8 im Profilrohr 6 des Tragkörpers 2 unmittelbar gleitend zu führen. Außerdem würde dann die Oberfläche des Verlängerungsrohrs 8 sehr schnell unansehnlich. Demzufolge sieht die erfindungsgemäße Konstruktion vor, daß am Ende des Profilrohrs 6 eine Gleitlagerhülse 9 und am innenliegenden Ende des Verlängerungsrohrs 8 ein Gleitlagerstopfen 10 fest angebracht ist. Bevorzugt ist es dabei, daß die Gleitlagerhtilse 9 bzw, der Gleitlagerstopfen 10 aus vorzugsweise mit Gleithilfsmitteln ausgerüstetem Kunststoff besteht, Bei solchem Gleithilfsmittel handelt es sich üblicherweise um einen Zusatz aus PTFE oder um im Kunststoff eingelagerte sonstige Fremdstoffe. Durch die Gleitlagerhülse 9 und den Gleitlagerstopfen 10 wird ein minimaler Spalt zwischen Verlängerungsrohr 8 und Profilrohr 6 geschaffen, so daß deren Oberflächen nicht unmittelbar aufeinander gleiten, sondern nur die Werkstoffpaarung Kunststoff/Metall (bei Ausführung des Tragkörpers 2 aus Aluminium) auftritt. Die Fixierung der Gleitlagerhülse 9 und des Gleitlagerstopfens 10 am Profilrohr 6 bzw. Verlängerungsrohr 8 kann durch Klebung erfolgen, erfolgt in den dargestellten Ausführungsbeispielen jedoch mechanisch durch Stifte oder Schrauben.

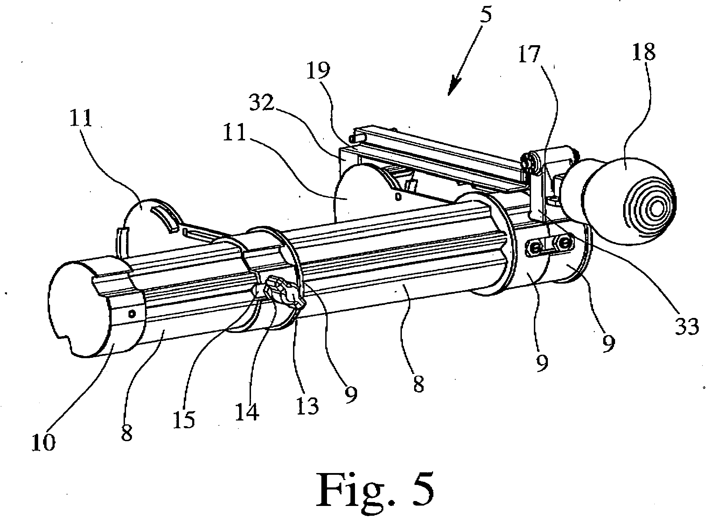

Fig. 3 und 5 lassen sehr schön erkennen, daß man die Gleitlagerhülse 9, insbesondere wenn sie aus Kunststoff gespritzt ist, bei der Ausführung des Tragkörpers 2 als Doppelrohrprofil weiter optimieren kann. Dargestellt ist dort nämlich daß die Gleitlagerhülse 9 am Ende des einen Profilrohrs 6 mit einer Verschlußkappe 11 am Ende des benachbarten Profilrohrs 6 einteilig ausgeführt, insbesondere einstückig aus Kunststoff gespritzt ist.

Der Gleitlagerstopfen 10 am Verlängerungsrohr 8 im Profilrohr 6 dient in Verbindung mit der Gleitlagerhülse 9 am Profilrohr 6 gleichzeitig als Anschlag für das Ausziehen des Verlängerungsrohrs 8 aus dem Profilrohr 6. Normalerweise wird aber das Verlängerungsrohr 8 weiter innen im Profilrohr 6 sitzen, so wie das Fig. 5 andeutet. Sonst kann das Verlängerungsrohr 8 die auf ihm allein schon aufgrund seines Eigengewichts lastenden Biegemomente nicht vernünftig in das Profilrohr 6 ableiten. Möglicherweise trägt das Verlängerungsrohr 8 entsprechende Markierungen, um ein zu weites Ausziehen aus dem Profilrohr 6 zu vermeiden.

In der gewünschten Stellung soll das Verlängerungsrohr 8 am Profilrohr 6 natürlich fixiert werden können. Die hierzu typische Spannschraube ist bei der bevorzugten Ausführung des erfindungsgemäßen Maschinenständers sehr elegant in die Gleitlagerhülse 9 integriert. Wie Fig. 3 und 5 erkennen lassen ist nämlich hier realisiert, daß das Profilrohr 6 am der Gleitlagerhülse 9 zugeordneten Ende eine Radialbohrung 12 für eine Klemmschraube 13 aufweist und die Gleitlagerhülse 9 einen Gewindeblock 14 und ein Druckverteilungselement 15 für die Klemmschraube 13 trägt. Man kann die Radialbohrung 12 unter der Klemmschraube 13 in Fig. 3 vermuten. Die durch die Radialbohrung 12 in den Gewindeblock 14 eingeschraubte Klemmschraube 13 kann gleichzeitig der axialen Fixierung der Gleitlagerhülse 9 im Profilrohr 6 dienen. Konkret wird hier jedoch die Gleitlagerhülse 9 durch axial in Schraubkanäle des Profilrohrs 6 eingeschraubte Befestigungsschrauben gewährleistet. Der Gewindeblock 14 bildet das Widerlager für das Spannen der Klemmschraube 13 gegen das Verlängerungsrohr 8. Damit dessen Oberfläche keinen Schaden nimmt, ist am Kunststoff der Gleitlagerhülse 9 eine Art Lasche ausgeschnitten, die als Druckverteilungselement 15 dient.

Die Fig. 3 bis 16 zeigen eine weitere Besonderheit des erfindungsgemäßen Maschinenständers. Die Befestigungsmethode für Anbauteile 5 am Tragkörper 2 wird hier mittels entsprechender Grundträger 16 auch an den Verlängerungsrohren 8 wiederholt. Dazu ist vorgesehen, daß auf dem Verlängerungsrohr 8 am äußeren Ende ein Grundträger 16 für Anbauteile 5 aufgesteckt und befestigt ist. Dabei ist im dargestellten und bevorzugten Ausführungsbeispiel vorgesehen, daß der Grundträger 16 ein kurzer Abschnitt des Profils ist, das auch den Tragkörper 2 bildet. Damit ist natürlich gemeint, daß ein kurzes Stück eines Doppelrohrprofils, wie es für den Tragkörper 2 verwendet wird, hier als Grundträger 16 für Anbauteile 5 eingesetzt wird.

Die Anbringung des Grundträgers 16 auf dem Verlängerungsrohr 8 erfolgt in entsprechender Weise wie die Anbringung des Verlängerungsrohrs 8 im Profilrohr 6 mittels entsprechender Gleitlagerhülsen 9. In Fig. 3 und Fig. 5 kann man im Zusammenhang erkennen, daß nach bevorzugter Lehre hier zwei Gleitlagerhülsen 9 beidseits am Grundträger 16 vorgesehen sind. Beide Gleitlagerhülsen 9 sind hier mittels versenkter Schrauben dauerhaft am Grundträger 16 fixiert.

Am Grundträger 16 lassen sich wie am Tragkörper 2 selbst die gewünschten Anbauteile 5 befestigen.

Nach besonders bevorzugter und eigenständiger Lehre erkennt man, daß als Anbauteil 5 eine Werkstückstütze 5" vorgesehen und mittels einer Schraubklemmung oder einer Federkraftklemmung über die Formschlußmittel 4 am Tragkörper 2 bzw. am Grundträger 16 fixierbar ist. Dabei kann man vorsehen, daß die Werkstückstütze 5" aus Blechformteilen und/oder aus Kunststofformteilen besteht.

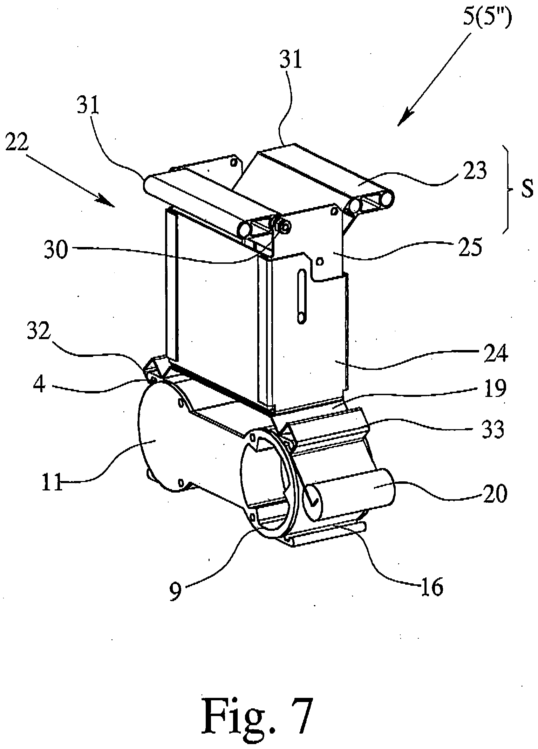

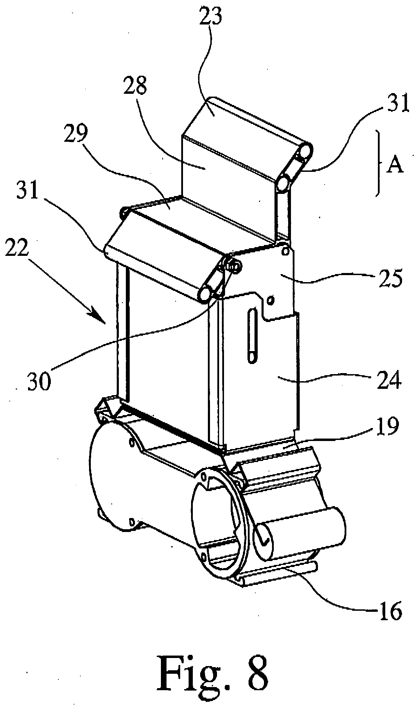

Die Ausführungsbeispiele gemäß Fig. 3-6 zeigen Werkstückstützen 5" mit Schraubklemmung mit Gewindestange 17 und Drehknauf 18. Die Ausführungsbeispiele von Fig. 7 und 8 zeigen eine Federkraftklemmung mit einem aus Federstahl bestehenden Grundkörper 19, an dessen rechts liegendem Ende in Fig. 7 und 8 eine Handhabe 20 als eine Art Wulst zu sehen ist.

Die Schraubklemmung mittels Drehknauf 18 und Gewindestange 17 ist auch beim Maschinenhalter 5' eine sehr zweckmäßige Lösung. Bei mehreren Umdrehungen des Drehknaufs 18 bis in die Fixierungsstellung kann man die Verspannung des Maschinenhalters 5' am Tragkörper 2 feinfühlig einstellen.

Die in diesen Ausführungsbeispielen dargestellte Werkstückstütze 5" weist einen Grundkörper 19 auf. Dieser enthält bzw. bildet hier auch eine Klemmechanik. In den Fig. 3, 4, 6 erkennt man dabei, daß am Grundkörper 19 eine quer zum Tragkörper 2 verlaufende Befestigungsschiene 21 vorgesehen ist.

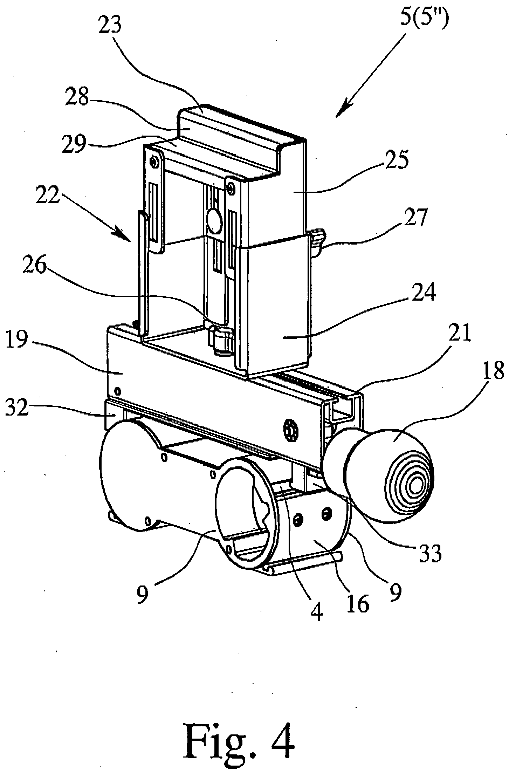

Fig. 4 zeigt ein Ausführungsbeispiel einer Werkstückstütze 5", bei der vorgesehen ist, daß am Grundkörper 19, insbesondere an dessen Befestigungsschiene 21, ein Stützkörper 22 mit einer höhenverstellbaren Auflage 23 für ein Werkstück befestigt ist.

Das in Fig. 4 dargestellte bevorzugte Ausführungsbeispiel zeigt, daß hier der Stützkörper 22 ein Unterteil 24 und ein dagegen höhenverstellbares Oberteil 25 mit der Auflage 23 aufweist. Dabei ist erkennbar, daß zur Höhenverstellung das Oberteil 25 gegenüber dem Unterteil 24 vertikal verschiebbar ist. Man erkennt am Unterteil 24 einen Drehknauf 26, mit dem eine Klemmechanik zur seitlichen Verstellung des Stützkörpers 22 auf der Befestigungsschiene 21 bedient werden kann. Außerdem erkennt man in Fig. 4 rückseitig am Unterteil 24 einen weiteren Drehknauf 27 für die Höhenverstellung des Oberteils 25 gegenüber dem Unterteil 24, Links davon ist ein weiterer Drehknauf verdeckt angeordnet.

Das in Fig. 4 dargestellte und insoweit bevorzugte Ausführungsbeispiel zeigt im übrigen, daß vor der Auflage 23 des Oberteils 25 eine Stufe liegt, deren vertikal verlaufende Fläche 28 einen Längenanschlag und deren davor liegende horizontale Fläche eine zweite Auflage 29 für ein Werkstück bildet. In einer unteren Stellung wirkt die Werkstückstütze 5" gemäß Fig. 4 nur als Auflage für das Werkstück. In einer angehobenen Stellung hingegen kommt die vertikal ausgerichtete Fläche 28 als Längenanschlag für das Werkstück zur Geltung. Das Werkstück liegt dann nicht mehr auf der Auflage 23, sondern auf der durch die vertikal verlaufende Fläche 28 nach unten versetzt angeordneten zweiten Auflage 29.

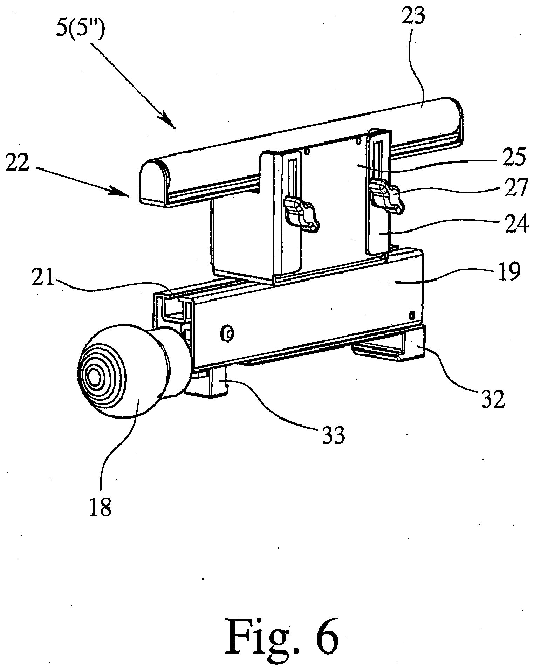

Das in Fig. 6 dargestellte weitere Ausführungsbeispiel einer Werkstückstütze 5" läßt zunächst besonders schön die Befestigungsschiene 21 mit dem Drehknauf 18 und auf der Befestigungsschiene 21 den Stützkörper 22 mit dem Unterteil 24 und dem dagegen höhenverstellbaren Oberteil 25 (rechts und links die Drehknaufe 27) erkennen. Als Auflage 23 dient hier eine Auflagerolle.

Ein weiteres und besonders interessantes Ausführungsbeispiel einer Werkstückstütze 5" ist in Fig. 7 und 8 dargestellt. Nicht zwingend notwendig, aber hier verwirklicht, ist ein gegenüber dem Unterteil 24 vertikal verstellbares Oberteil 25. Hier ist allerdings vorgesehen, daß die Auflage 23 an einer um eine horizontal und quer zum Tragkörper 2 verlaufende Schwenkachse 30 schwenkbaren Winkelanordnung ausgebildet ist, die einerseits in einer Stützposition S und andererseits in einer dagegen um 45° versetzten Anschlagposition A am Stützkörper 22, insbesondere an dessen Oberteil 25, fixierbar ist. Fig, 7 zeigt die Stützposition S, Fig. 8 die dagegen um 45° geschwenkte Anschlagposition A. Mit einer einfachen Schwenkverstellung läßt sich diese Werkstückstütze 5" gewissermaßen "umschalten".

Im dargestellten Ausführungsbeispiel ist vorgesehen, daß die Fixierung der Winkelanordnung in der Stützposition S durch einen einseitigen Anschlag erfolgt. Ferner kann man vorsehen, daß die Fixierung der Winkelanordnung in der Anschlagposition A durch eine Rastung oder einen Fixierstift erfolgt,

Schließlich erkennt man in Fig. 7 besonders gut, daß im hier dargestellten und bevorzugten Ausführungsbeispiel die Winkelanordnung mit in Stützposition S horizontal liegenden, die Auflage 23 bildenden Stützflanschen 31 versehen ist und/oder daß in der Anschlagposition A eine zweite Auflage 29 in Wirkung tritt, die gegenüber der ersten Auflage 23 um 45° versetzt liegt. So hat man für ein langgestrecktes Werkstück in der Stellung gemäß Fig. 7 eine saubere großflächige Auflage, während in der Stellung von Fig. 8 ein ebenso gradliniger Anschlag mit einer dort wirkenden zweiten Auflage 29 gewährleistet ist.

Wie bereits im Stand der Technik realisiert ist, kann man vorsehen, daß für den Anbau einer Maschine, insbesondere einer Kappsäge, zwei parallel zueinander und quer zum Tragkörper 2 angeordnete Maschinenhalter 5' vorgesehen sind. Das erkennt man in Fig. 1 und 2 im Zusammenhang.

Für alle Anbauteile 5, also sowohl für die Maschinenhalter 5' als auch für die Werkstückstützen 5", kann man mit den nachfolgend näher erläuterten Anbringungstechniken zum Tragkörper 2 bzw. zu dessen Formschlußmitteln 4 hin arbeiten.

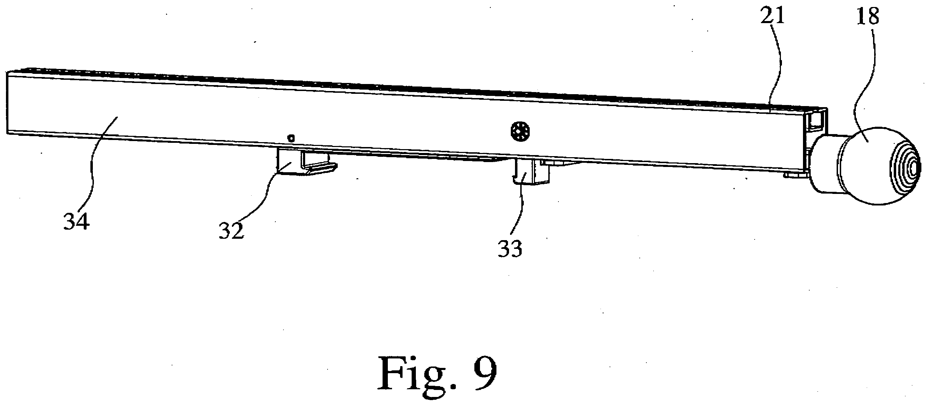

Grundsätzlich kann man vorsehen, daß das Anbauteil 5 mittels einer Klemmechanik über die Formschlußmittel 4 am Tragkörper 2 fixierbar ist und daß die Klemmechanik, insbesondere an einem Grundprofil 34, eine feststehende Klemmbacke 32 und eine dagegen verstellbare Klemmbacke 33 aufweist. Derartige Klemmbacken 32, 33 erkennt man bei den Werkstückstützen 5" gemäß Fig. 3 - 8 und bei den Maschinenhaltern 5' gemäß Fig. 9 ff. Im einzelnen erläutert werden sollen die Konstruktionsvarianten anhand der Maschinenhalter 5', die ab Fig. 9 dargestellt sind.

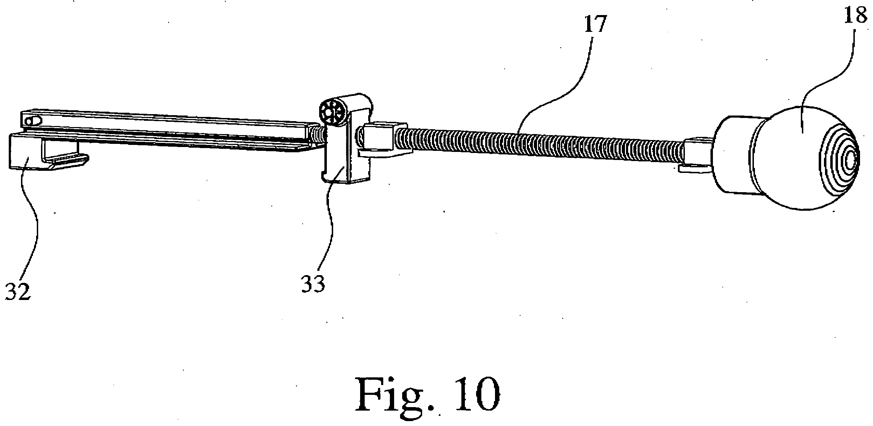

Bei dem in Fig. 9 und 10 dargestellten Ausführungsbeispiel (das dem Ausführungsbeispiel der Werkstückstütze 5" gemäß Fig. 3-6 entspricht) gilt, daß die verstellbare Klemmbacke 33 am Grundprofil 34 des Anbauteils 5 um eine horizontale Achse schwenkbar gelagert ist. Man erkennt ferner, daß die verstellbare Klemmbacke 33 mittels einer im Grundprofil 34 gelagerten Gewindestange 17 verstellbar ist.

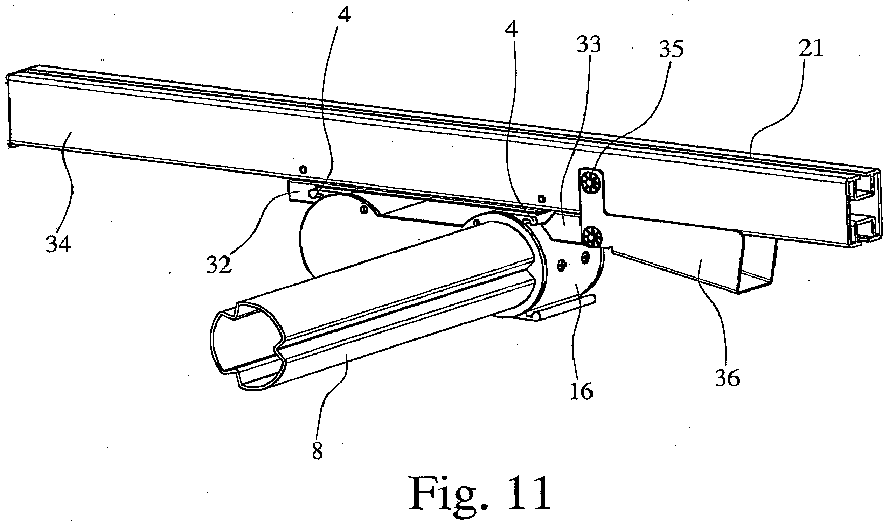

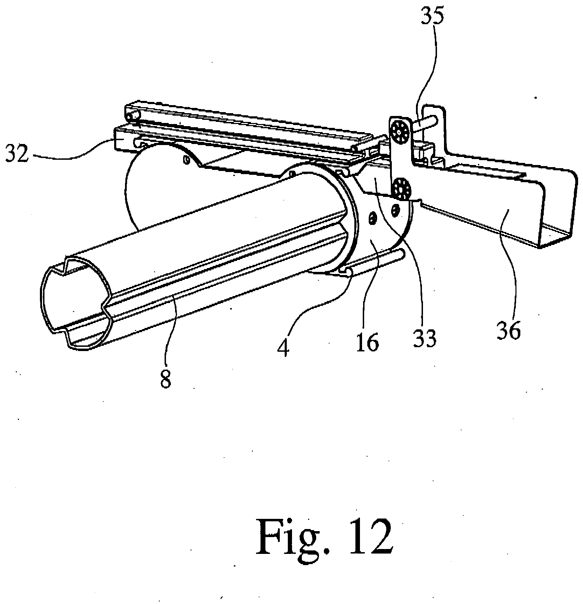

Bei dem Ausführungsbeispiel eines Anbauteils 5, insbesondere eines Maschinenhalters 5', das in Fig. 11 und 12 dargestellt ist, gilt hingegen, daß die verstellbare Klemmbacke 33 am Grundprofil 34 quer zum Tragkörper 2 verschiebbar gelagert, in Fixierungsrichtung federvorgespannt und mittels eines am Grundprofil 34 um eine horizontale Achse 35 schwenkbar gelagerten oder am Grundprofil 34 verschiebbar gelagerten Handhebels 36 gegen die Federkraft rückziehbar ist.

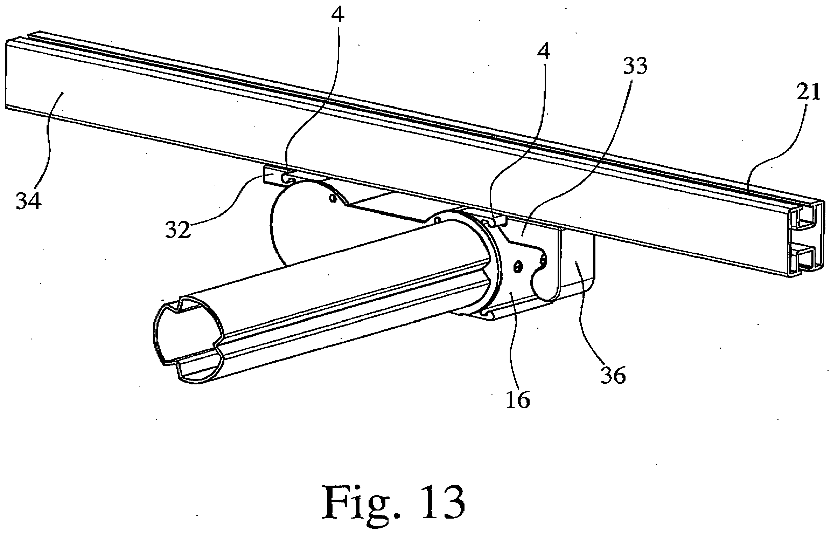

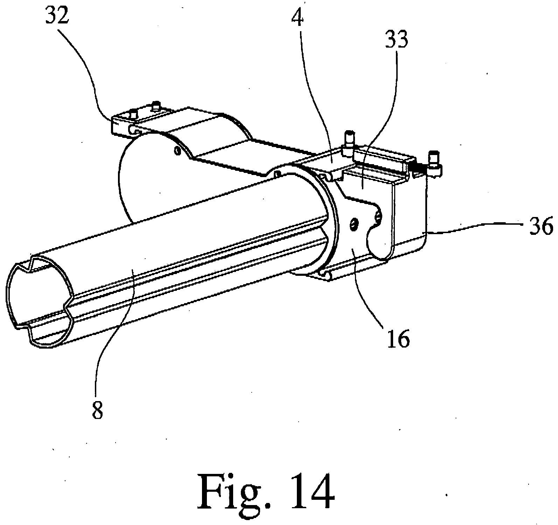

Die an zweiter Stelle genannte Variante mit dem verschiebbar gelagerten Handhebel 36 zeigt das Ausführungsbeispiel, das in Fig. 13 und 14 dargestellt ist. In allen Fällen ist wesentlich, daß die Nase der verstellbaren Klemmbacke 33 in das zugehörige Formschlußmittel am Tragkörper 2 bzw. am Grundträger 16 auf dem Verlängerungsrohr 8 sicher einfaßt. Die Anforderungen daran sind beim Maschinenhalter 5' naturgemäß höher als bei der Werkstückstütze 5", da der Maschinenhalter 5' wesentlich höhere Belastungen aushalten muß. An diese Anforderungen werden die Abmessungen und Federkräfte angepaßt.

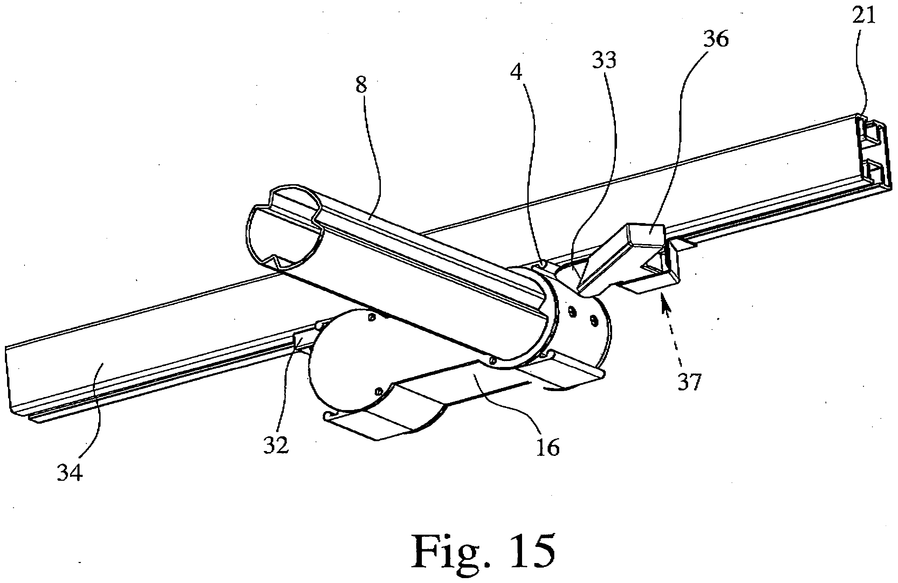

Bei dem in Fig. 15 dargestellten Ausführungsbeispiel gilt, daß die verstellbare Klemmbacke 33 am Grundprofil 34 um eine vertikale Achse 37 schwenkbar gelagert und seitlich bogenförmig in die Fixierungsstellung am Tragkörper 2 einschwenkbar ist. Bei Betätigen des Handhebels 36 dreht sich die äußere exzentrische Kontur der verstellbaren Klemmbacke 33 weg von dem Formschlußmittel 4 des Tragkörpers 2, so daß der Maschinenhalter 5' abgenommen werden kann. Die Federvorspannung in Eingriffsrichtung wird durch eine Blattfeder in der Halterung des Handhebels 36 erzeugt.

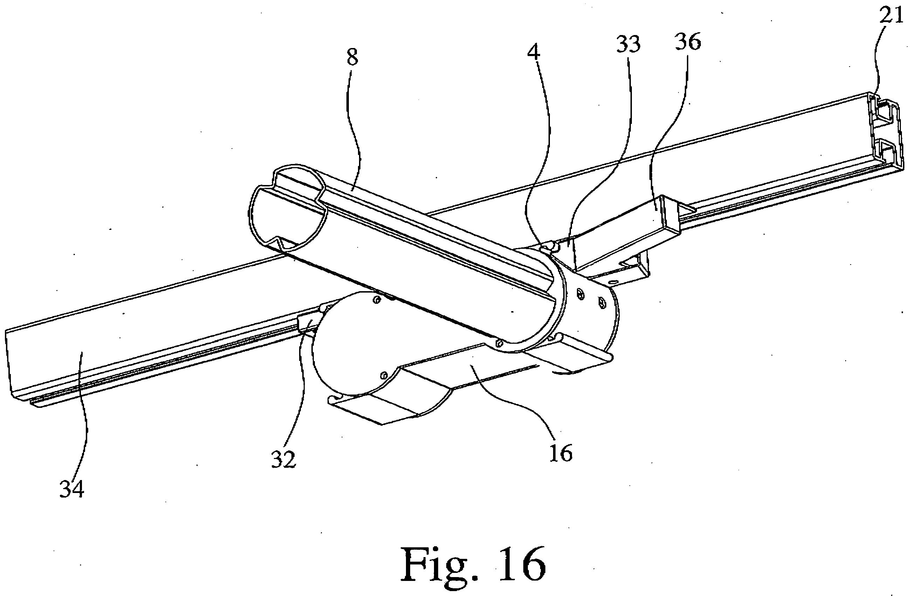

Bei dem in Fig. 16 dargestellten, weiteren Ausführungsbeispiel erfolgt die Betätigung ähnlich wie beim Ausführungsbeispiel von Fig. 15, jedoch erfolgt die Klemmung am Formschlußmittel 4 mittels einer kleinen Klemmnase. Man kann im übrigen auch vorsehen, daß die verstellbare Klemmbacke 33 nur durch Handbetätigung und ohne Federkraftwirkung schwenkbar und zumindest in der Fixierungsstellung verrastet ist.

Die Darstellung der Maschinenhalter 5' als Anbauteile 5 in Fig. 11 bis 16 erfolgte aus Gründen der besseren Übersichtlichkeit an einem Grundträger 16, nicht am Tragkörper 2 selbst, obwohl an sich die Maschinenhalter 5' etwa mittig am Tragkörper 2 angeordnet sind, wie das Fig. 1 erkennen läßt. Für die Anbringung am Tragkörper 2 selbst gilt genau das gleiche.

Die Fig. 11 bis 16 zeigen im übrigen, wie sauber aufgeräumt durch die Verschlußkappe 11 auf beiden Seiten der Grundträger 16 am Ende des Verlängerungsrohrs 8 aussieht, Schließlich zeigen die genannten Figuren, daß die Befestigungsschiene 21 ganz besonders zweckmäßig als Strangpreßprofil aus faserverstärktem Kunststoff oder, insbesondere, aus einem Leichtmetall, insbesondere Aluminium, ausgeführt ist und oberseitig und unterseitig dieselbe T-Nut aufweist, in der dann entsprechende Nutensteine für Befestigungszwecke laufen.

## Patentansprüche

1. Maschinenständer mit
einem langgestreckten Tragkörper (2) und
endseitig am Tragkörper (2) angeordneten Standbeinen (3),
wobei der Tragkörper (2) derart mit in Längsrichtung verlaufenden Formschlußmitteln (4) gestaltet ist, daß an ihm Anbauteile (5), gegebenenfalls in Längsrichtung verschiebbar, anbringbar sind, und
wobei für den Anbau einer Maschine, insbesondere einer Kappsäge, als Anbauteile (5) zwei parallel zueinander und quer zum Tragkörper (2) angeordnete Maschinenhalter (5') vorgesehen sind,
wobei das bzw. das jeweilige Anbauteil (5), insbesondere der Maschinenhalter (5'), mittels einer Klemmechanik über die Formschlußmittel (4) am Tragkörper (2) fixierbar ist und wobei die Klemmechanik an einem Grundprofil (34) eine feststehende Klemmbacke (32) und eine dagegen verstellbare Klemmbacke (33) aufweist,
**dadurch gekennzeichnet,**
**daß** die verstellbare Klemmbacke (33) am Grundprofil (34) quer zum Tragkörper (2) verschiebbar gelagert, in Fixierungsrichtung federvorgespannt und mittels eines am Grundprofil (34) um eine horizontale Achse (35) schwenkbar gelagerten oder am Grundprofil (34) verschiebbar gelagerten Handhebels (36) gegen die Federkraft rückziehbar ist.

2. Maschinenständer mit
einem langgestreckten Tragkörper (2) und
endseitig am Tragkörper (2) angeordneten Standbeinen (3),
wobei der Tragkörper (2) derart mit in Längsrichtung verlaufenden Formschlußmitteln (4) gestaltet ist, daß an ihm Anbauteile (5), gegebenenfalls in Lingsrichtung verschiebbar, anbringbar sind, und
wobei für den Anbau einer Maschine, insbesondere einer Kappsäge, als Anbauteile (5) zwei parallel zueinander und quer zum Tragkörper (2) angeordnete Maschinenhalter (5') vorgesehen sind,
wobei das bzw. das jeweilige Anbauteil (5), insbesondere der Maschinenhalter (5'), mittels einer Klemmechanik über die Formschlußmittel (4) am Tragkörper (2) fixierbar ist und wobei die Klemmechanik an einem Grundprofil (34) eine feststehende Klemmbacke (32) und eine dagegen verstellbare Klemmbacke (33) aufweist,
**dadurch gekennzeichnet,**
**daß** die verstellbare Klemmbacke (33) am Grundprofil (34) um eine vertikale Achse (37) schwenkbar gelagert und seitlich bogenförmig in die Fixierungsstellung am Tragkörper (2) einschwenkbar ist.

3. Maschinenständer nach Anspruch 2, **dadurch gekennzeichnet,**
**daß** die verstellbare Klemmbacke (33) in Fixierungsrichtung federvorgespannt und dem entgegen durch Handbetätigung ausschwenkbar ist.

4. Maschinenständer nach Anspruch 2, **dadurch gekennzeichnet,**
**daß** die verstellbare Klemmbacke (33) nur durch Handbetätigung und ohne Federkraftwirkung schwenkbar und zumindest in der Fixierungsstellung verrastet ist.

## Claims

1. A machine stand comprising an elongate support body (2) and
support legs (3), arranged at the ends of the support body (2),
the support body (2) being designed with positive fit means (4) extending in the longitudinal direction, in such a way that add-on parts (5) can be attached thereto, possibly so as to be displaceable in the longitudinal direction and wherein for the add-on of a machine, especially of a miter saw, two machine holders (5') are arranged as add-on parts (5) to be parallel to each other and oblique to the support body (2),
wherein said or the respective add-on part (5), especially the machine holder (5'), is fixable by means of a clamp mechanic through the positive fit means (4) at the support body (2) and wherein the clamp mechanic comprises on a base profile (34) a stationary clamp jaw (32) and a thereto relatively adjustable clamp jaw (33),
**characterized in that**
the adjustable clamp jaw (33) is supported at the base profile (34) such that it is slideable obliquely to the support body (2), it is preloaded in the direction of the fixation and it is by means of a manual lever (36) recaptable against the spring force, the manual lever (36) being pivotably mounted on the base profile (34) about a horizontal axis (35) or being slideably supported at the base profile (34).

2. A machine stand comprising
an elongate support body (2) and
support legs (3) arranged at the ends of the support body (2),
the support body (2) being designed with positive fit means (4) extending in the longitudinal direction, in such a way that add-on parts (5) can be attached thereto, possibly so as to be displaceably in the longitudinal direction, and wherein for the add-on of a machine, especially of a miter saw, two machine holders (5') are arranged as add-on parts (5) to be parallel to each other and oblique to the support body (2),
wherein said or the respective add-on part (5), especially the machine holder (5'), is fixable by means of a clamp mechanic through the positive fit means (4) at the support body (2) and wherein the clamp mechanic comprises on a base profile (34) a stationary clamp jaw (32) and a thereto relatively adjustable clamp jaw (33),
**characterized in that**
the adjustable clamp jaw (33) is supported at the base profile (34) such that it is pivotably supported about a vertical axis (37) and that it can be pivoted laterally arc-shaped in the fixing position at the support body (2).

3. The machine stand as claimed in claim 1,
**characterized in that**
the adjustable clamp jaw (33) is preloaded in the direction of fixation and can be pivoted out against it by manual operation.

4. The machine stand as claimed in claim 2,
**characterized in that**
the adjustable clamp (33) can only be pivoted by manual operation and without any spring force active and is latched at least in the fixation position.

## Revendications

1. Support de machine comportant
un corps porteur (2) allongé et
des pieds dressés (3) disposés aux extrémités du corps porteur (2),
dans lequel le corps porteur (2) est pourvu de pièces profilées (4) s'étendant longitudinalement, de telle manière que des pièces de fixation (5) peuvent y être adaptées et y coulisser, pour, le cas échéant y être montées, et
dans lequel pour le montage d'une machine, en particulier une scie à onglet, comme pièce accessoire (5), deux corps supports de machine (5') parallèles entre eux et transversaux par rapport au corps porteur (2), sont prévus,
dans lequel, le cas échéant, la pièce de fixation (5), en particulier le corps support de machine (5'), est agencé pour être fixé au moyen d'un mécanisme de pincement au corps porteur (2), sur les pièces profilées (4) et, le mécanisme de pincement comporte une joue de pincement (32) solidaire d'un profil de base (34) et une joue de pincement déplaçable (33) disposée en regard, **caractérisé en ce que**,
la joue de pincement déplaçable (33) est montée sur le profil de base (34), transversalement en coulissement vers le corps porteur (2), précontraint par ressort dans la direction de fixation et au moyen d'un levier manuel pivotant (36), sur le profil de base (34), coulissant autour d'un axe de pivotement horizontal (35) sur le profil de base (34) ou mobile en coulissement rétractable contre la contrainte du ressort.

2. Support de machine comportant
un corps porteur (2) allongé et
des pieds dressés (3) disposés aux extrémités du corps porteur (2),
dans lequel le corps porteur (2) est pourvu de pièces profilées (4) s'étendant longitudinalement, de telle manière que des pièces de fixation (5) peuvent y être adaptées et y coulisser, pour le cas échéant y être montées, et
dans lequel pour le montage d'une machine, en particulier une scie à onglet, comme pièce accessoire (5), deux corps supports de machine (5') parallèles entre eux et transversaux par rapport au corps porteur (2), sont prévus,
dans lequel, le cas échéant, la pièce de fixation (5), en particulier le corps support de machine (5'), est agencé pour être fixé au moyen d'un mécanisme de pincement au corps porteur (2), sur les pièces profilées (4) et, le mécanisme de pincement comporte une joue de pincement (32) solidaire d'un profil de base (34) et une joue de pincement déplaçable (33) disposée en regard, **caractérisé en ce que**,
la joue de pincement déplaçable (33) est montée sur le profil de base (34), pivotant autour d'un axe vertical (37) et est latéralement de forme arquée agencée pour être enclenchée dans la position de fixation sur le corps de fixation (2).

3. Support de machine selon la revendication 2,
**caractérisé en ce que**,
la joue de pincement déplaçable (33) est précontrainte par ressort dans la direction de fixation et peut être débloquée manuellement à son encontre.

4. Support de machine selon la revendication 2,
**caractérisé en ce que**
la joue de pincement déplaçable (33) est agencée pour être bloquée en position fixée uniquement par une forme exercée manuellement et sans force de ressort précontrainte.
